# EUROPEAN PATENT APPLICATION

(11) **EP 1 478 072 A2**
(43) Date of publication of application: **17.11.2004**
(21) Application number: 04011536.2
(22) Date of filing: 14.05.2004
(51) Int. Cl.: H02J 1/10, H02J 7/14, H02J 7/34

(54) **Apparatus and method for redundant power supply in a vehicle**

(30) Priority: 16.05.2003 JP 2003138068
(71) Applicant: Hitachi, Ltd., Chiyoda-ku, Tokyo 101-8010 (JP)
(72) Inventor: Kuramochi, Yuichi, 1-chome, Chiyoda-ku, Tokyo 100-8220 (JP); Manaka, Toshio, 1-chome, Chiyoda-ku, Tokyo 100-8220 (JP); Matsubara, Kenichiro, 1-chome, Chiyoda-ku, Tokyo 100-8220 (JP)
(74) Representative: Beetz & Partner Patentanwälte

(57) **Abstract**

The invention relates to a power supplying apparatus and method for a vehicle, in which a plurality of loads (107, 108) and a plurality of power supplies (100, 115) are connected to each other in such a manner that one of the loads is connected to a plurality of the power supplies, and one of the plurality of the power supplies is connected to a plurality of the loads. Further, the power supplies and the loads are connected through a breaker unit (104, 101, 111, 114) for electrically disconnecting the circuit under predetermined conditions and a unidirectional conductive unit for allowing the current to flow in one direction and blocking the current in the opposite direction.

## Description

### BACKGROUND OF THE INVENTION

The present invention relates to a power supplying apparatus and method for a vehicle, in which power is supplied from power supplies to electrical loads mounted on the vehicle.

In recent years, such devices as the brake, the gear shift mechanism of the transmission of an automotive vehicle which have conventionally been driven by a hydraulic or mechanical system have come to be driven electrically. The high controllability of the electrical equipment improves the safety and dynamism of the vehicle. The electrical equipment, however, requires electric power as a drive source, and once power supply is stopped, loses the function thereof. Therefore, a high reliability is required of the power supply system. For this reason, double power supply systems have been conceived in which power can be supplied from the desired one of the power supplies by switching a circuit (JP-A-2000-312444).

On the other hand, a system has been developed in which two power supplies are connected in parallel to a single electrical load (hereinafter referred to simply as a "load"). Even in the case where one of the power supplies fails, power can continue to be supplied to the load from the other power supply (JP-A-11-122701).

### SUMMARY OF THE INVENTION

In the conventional technique disclosed in JP-A2000-312444, however, the power supplies and the load are electrically disconnected from each other while the circuit is switched, and therefore the problem is posed that the power supplied to the load is provisionally stopped or reduced.

According to the prior art disclosed in JP-A-11-122701, on the other hand, in the case where the loads in one system are shorted or a part of the power supplying lines in one system develop a ground fault, the output voltages of both systems drop, thereby often making it impossible to supply power to the loads on the other system free of the fault.

With regard to the brake or the power steering system which is totally prohibited from losing the function to assure vehicle safety, the conventional double power supply systems are not a satisfactory solution, and a fail-safe mechanism constituted of a hydraulic or mechanical system is required in case of power failure. This leads to the problem of a lower fuel consumption efficiency due to the increased cost and weight of the vehicle.

The object of this invention is to provide a power supplying apparatus and method for a vehicle, in which even in the case where a power supply and a load connected in parallel to the same power supply system are shorted or a part of the power supply lines develop a ground fault, power can be supplied continuously to the load of another system free of the fault.

According to one aspect of the invention, there can be provided a power supplying apparatus and/or method for a vehicle, in which a plurality of power supplies can be connected to one load, and/or the plurality of the power supplies can be each connected with a plurality of loads. Further, the power supplies and/or the loads can be connected through a breaker unit for electrically disconnecting the circuit under predetermined conditions.

According to another aspect of the invention, there can be provided a power supplying apparatus and/or method for a vehicle, in which a plurality of loads and/or a plurality power supplies can be connected in such a manner that the plurality of the loads can be each connected with a plurality of power supplies, and/or the plurality of the power supplies can be each connected with a plurality of loads. Further, the power supplies and/or the loads can be connected through a breaker unit for electrically disconnecting the circuit under predetermined conditions.

In this specification, the "load" is not necessarily defined as a single electrical equipment but may include a group of electrical loads connected in parallel.

Other objects, features and advantages of the invention will become apparent from the following description of the embodiments of the invention taken in conjunction with the accompanying drawings.

### BRIEF DESCRIPTION OF THE DRAWINGS

Figs. 1A and 1B are block diagrams showing a power supplying apparatus for a vehicle according to an embodiment of the invention.
Figs. 2A and 2B are block diagrams showing a power supplying apparatus for a vehicle according to an embodiment of the invention.
Fig. 3 is a block diagram showing a fault detection unit and a circuit breaker unit according to an embodiment of the invention.
Fig. 4 is a block diagram showing a fault detection unit and a circuit breaker unit according to an embodiment of the invention.
Figs. 5A and 5B are block diagrams showing a power supplying apparatus for a vehicle according to an embodiment of the invention.
Figs. 6A and 6B are block diagrams showing a power supplying apparatus for a vehicle according to an embodiment of the invention.
Fig. 7 is a block diagram showing a power supplying apparatus for a vehicle according to an embodiment of the invention.
Fig. 8 is a block diagram showing a power supplying apparatus for a vehicle according to an embodiment of the invention.
Fig. 9 is a block diagram showing an electric brake system according to an embodiment of the invention.
Fig. 10 is a block diagram showing an electric brake system according to an embodiment of the invention.
Fig. 11 is a block diagram showing an electric power steering system according to an embodiment of the invention.
Fig. 12 is a block diagram showing an electric gear shift system according to an embodiment of the invention.
Fig. 13 is a block diagram showing an embodiment of the invention.

### DESCRIPTION OF THE EMBODIMENTS

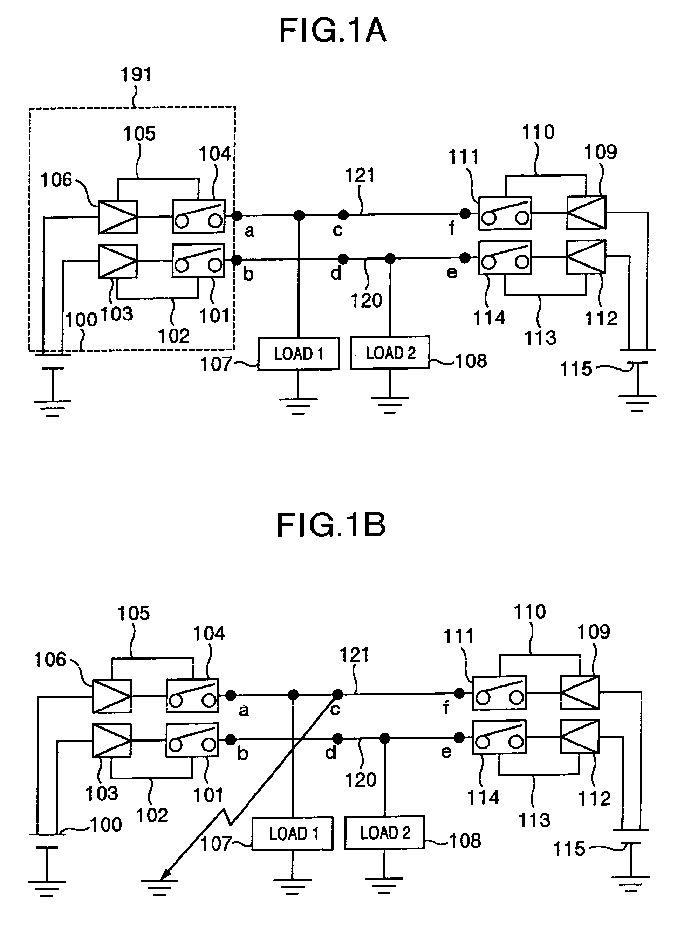

Fig. 1 shows a first embodiment of this invention. In Fig. 1A, reference numerals 100, 115 designate DC power supplies, numerals 101, 104, 111, 114 circuit breaker units, numerals 103, 106, 109, 112 fault detection units, numerals 102, 105, 110, 113 signal lines, numerals 107, 108 loads, and numerals 120, 121 power supplying lines. Power is adapted to be supplied to a load 1 (107) and a load 2 (108) from both the power supplies 100 and 115 through a circuit breaker unit and a fault detection unit. Specifically, power can be supplied to the load 1 (107) from the power supply 100 through the fault detection unit 106 and the circuit breaker unit 104 on the one hand and from the power supply 115 through the fault detection unit 109 and the circuit breaker unit 111 on the other hand. The load 2 (108) is similarly adapted to be supplied with power from the power supply 100 through the fault detection unit 103 and the circuit breaker unit 101 on the one hand and from the power supply 115 through the fault detection unit 12 and the circuit breaker unit 114 at the same time. In Figs. 1A and 1B, the contacts of the circuit breaker units 101, 104, 111, and 114 are illustrated as cut-off state. However, in the normal operation of the system, the contacts are in closed state.

The circuit breaker unit has the function of disconnecting the circuit in response to a signal from the fault detection unit. The fault detection unit has the function of detecting a fault (such as a voltage drop or an overcurrent due to a ground fault) on the circuit, and upon actual detection of a fault, can output a corresponding signal. The fault detection unit may be connected either to the power supply side of the circuit breaker unit as shown in Fig. 1A or to the load side of the circuit connecting unit.

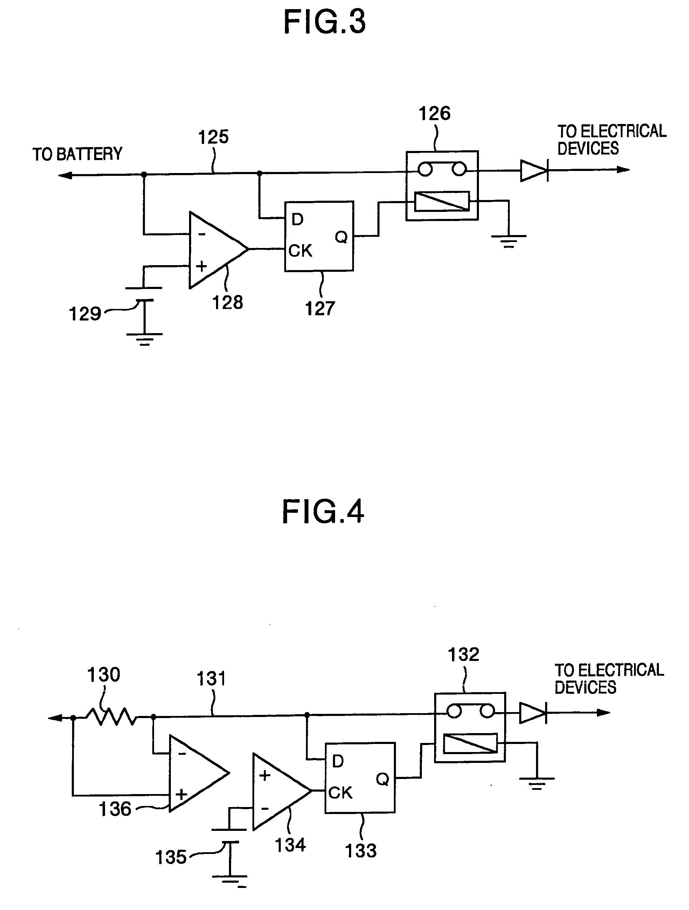

Fig. 3 shows an example of the fault detection unit and the circuit breaker unit. Fig. 3 shows an embodiment in which the voltage drop of the power supplying line is detected to activate the circuit breaker unit and disconnect the circuit. In Fig. 3, numeral 125 designates a power supplying line for supplying power from the power supply to the load, numeral 126 a relay making up a circuit breaker unit, numeral 127 a latch circuit, numeral 128 a comparator, and numeral 129 a reference voltage for the comparator.

Assume that the power supplying line 125 is grounded or shorted in the load. The potential of the power supplying line 125 considerably drops below the level under normal operating conditions. The potential of the power supplying line 125 is input to the comparator 128 and compared with a preset reference voltage 129. In the case where it is determined that the potential of the power supplying line 125 is lower than the reference voltage 129, the comparator 128 outputs a signal to the latch circuit 127. The relay 126 is a normally-closed relay adapted to disconnect the circuit upon receipt of a signal from the latch circuit 127. Thus, the circuit is disconnected. The reference voltage 129 is set, for example, by employing the potential of the power supplying line predicted at the time of a ground fault from the circuit configuration or a potential somewhat higher than predicted.

Fig. 4 shows another example of the fault detection unit and the circuit breaker unit. In the configuration shown in Fig. 4, the overcurrent of the power supplying line is detected to activate the circuit breaker unit and thus disconnect the circuit. In Fig. 4, numeral 131 designates a power supplying line for supplying power from the power supply to the load, numeral 130 a shunt resistor for detecting the overcurrent, numeral 132 a relay making up a circuit breaker unit, numeral 133 a latch circuit, numeral 134 a comparator, numeral 135 a reference voltage for the comparator 134, and numeral 136 a differential amplifier.

In the event that the power supplying line 131 is grounded or the shorting occurs in the load, an overcurrent flows in the power supplying line 131, so that the potential across the shunt resistor 130 rises. This potential increase is amplified by the differential amplifier 136, input to the comparator 134 and compared with a preset reference voltage 135. In the case where it is determined that the potential across the shunt resistor is higher than the reference voltage 135, the comparator 134 outputs a signal to the latch circuit 133. The relay 132 is a normally-closed relay (a relay normally in closed state) for disconnecting the circuit upon receipt of a signal from the latch circuit 133. In this way, the circuit is disconnected. The circuit breaker unit is not limited to the relay but may be any device such as a switch which disconnects the circuit in response to a predetermined signal input.

Assume that the circuit is grounded at point c as shown in Fig. 1B. Once the circuit is grounded at point c, the short-circuit current flows from the power supply 100 through the fault detection unit 106 and the circuit breaker unit 104. The short-circuit current also flows from the power supply 115 through the fault detection unit 109 and the circuit breaker unit 111. Upon generation of the short-circuit current, the fault detection units 104, 109 detect a voltage drop or an overcurrent on the power supplying line 121, the circuit breaker units 104, 111 disconnect the circuit, and thus the grounded point c is separated to protect the circuit. As a result, the power thus far supplied to the load 1 (107) is stopped, while continuing to supply power to the load 2 (108). A similar operation is performed also in the case where the load 1 is shorted.

In the case where the circuit is grounded at point d, on the other hand, the circuit can be protected from the burning due to the short-circuit current thereby to secure the power supply to the load 1 (107) even if the load 2 is shorted.

In the case where the power supply 100 falls or the system of the power supply 100 is disconnected (such as when the circuit breaker units 104, 101 open), power is supplied to the loads 1 (107) and 2 (108) from the power supply 115. In the case where the power 115 falls or the system of the power supply 1115 is disconnected (such as when the circuit breaker units 111, 114 open), on the contrary, power is supplied to the loads 1 (107) and 2 (108) from the power supply 100.

As described above, according to this embodiment, power can be securely supplied to at least one load even in the case where one of the loads is shorted, the circuit is grounded in the system, the power supply of one system falls or the circuit is disconnected. It is also possible to disconnect the system which has developed the fault and thus to avoid the burning of the circuit or the damage to the power supply due to the short-circuit current.

As described later with reference to an embodiment, assume, for example, that the circuit is connected in such a manner that two of the four electric brake actuators mounted on the four wheels of the vehicle constitute the load 1 and the other two brake actuators constitute the load 2. Then, even in the event of a fault such as a ground fault within the system, the power fall of one system or the circuit disconnection, the brakes of all the four wheels are prevented from becoming inoperative and the braking force can be generated to some degree. Thus, the reliability of the electric brake is improved.

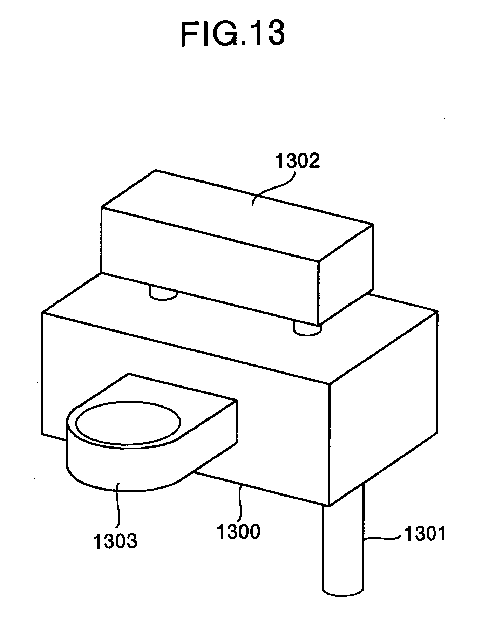

Further, according to this embodiment, the wiring defined by a frame 191 in Fig. 1A is constructed as shown in Fig. 13. Thus, the ground fault of the wiring between the power supply 100 and the fault detection units 106, 103 can be prevented, thereby improving the reliability of the power supply operation.

In Fig. 13, the power supplying line 1301 corresponds to the power supplying line 121 in Fig. 1, and the breaker unit 1302 corresponds to the breaker units 101, 104 in Fig. 1. The detection units 103, 106 may be arranged integrally with the breaker unit 1301 or so configured that upon detection of an abnormality of the power supplying line 1301, a signal is transmitted to the breaker unit 1302. The power connection terminal 1303 is for connecting the power supplying apparatus to the power supply 109. By integrating the breaker unit 1302 and the power connection terminal 1303 in the form of a connector 1300 as described above, the wiring length between the breaker unit 1302 and the power connection terminal 1303 can be shortened and the chance of wiring exposure is reduced.

An application of the configuration shown in Fig. 13 to this embodiment, therefore, prevents the ground fault of the wiring between the power supply 100 and the breaker unit 101 or 104 (or the fault detection units 106, 103 in the case where the fault detection unit is inserted on the power supply side of the breaker unit), thereby improving the power supply reliability.

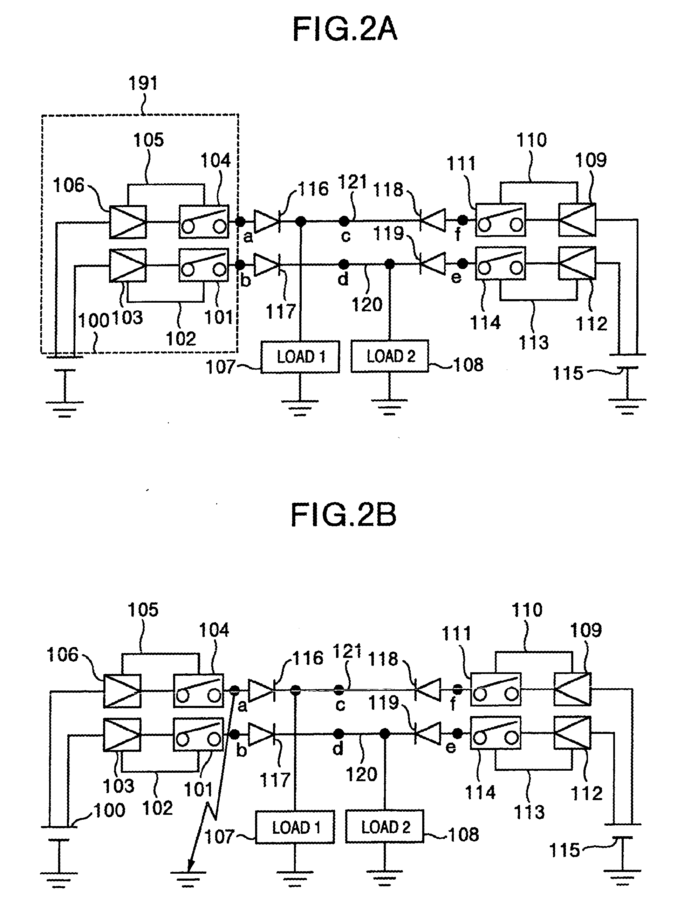

Also, as shown in Fig. 2A, diodes 116, 117 are connected between the circuit breaker units 104, 101 and the load 1 (107), respectively, and diodes 118, 119 between the circuit breaker units 111, 114 and the load 2 (108), respectively. In this way, the reliability of the power supplying apparatus for a vehicle according to this embodiment is further improved.

In Fig. 2A, the diodes are arranged in order to prevent the fault of one power supply system (for example, the power line from point a to the power supply 100) from having an effect on the other power supply system (for example, the power line from point f to the power supply 115). As shown in Fig. 2B, for example, assume that the ground fault has occurred at point a on the anode side of the diode 116 of the power supplying line 121. The potential at point a drops due to the short-circuit current, so that the short-circuit current flows through the power supply 100, the circuit breaker unit 104 and the fault detection unit 106. As a result, the fault detection unit 106 detects the voltage drop or the overcurrent caused by the ground fault, and outputs a fault signal to the circuit breaker unit 104 through the signal line 105. The circuit breaker unit 104, upon detection of this fault detection signal, cuts off the power from the power supply 100 and thus protects the circuit from the burning or the like damage which otherwise might be caused by the short-circuit current. In Figs. 2A and 2B, the contacts of the circuit breaker units 101, 104, 111, and 114 are illustrated as cut-off state. However, in the normal operation of the system, the contacts are in closed state.

In the process, the diode 116 is connected in the reverse direction between the power supply 115 and point a, and therefore no short-circuit current flows from the power supply 115 toward point a. Thus, the power continues to be supplied from the power supply 115 to the load 1 (107). In similar fashion, even in the case where a ground fault occurs at point b, f or e, the circuit is protected from the burning due to the short-circuit current, and the power continues to be supplied to the load.

The effects of the ground fault at point c, d, the fall of one of the power supplies or the disconnection of one of the power supplying lines are similar to those of the faults in the configuration shown in Fig. 1A. In this case, therefore, at least one of the loads can be supplied with power continuously. Also, unlike in the configuration of this embodiment which uses the diodes, any device other than the diode which can allow the current to flow in one direction and block the current flow in the other direction may be used with equal effect.

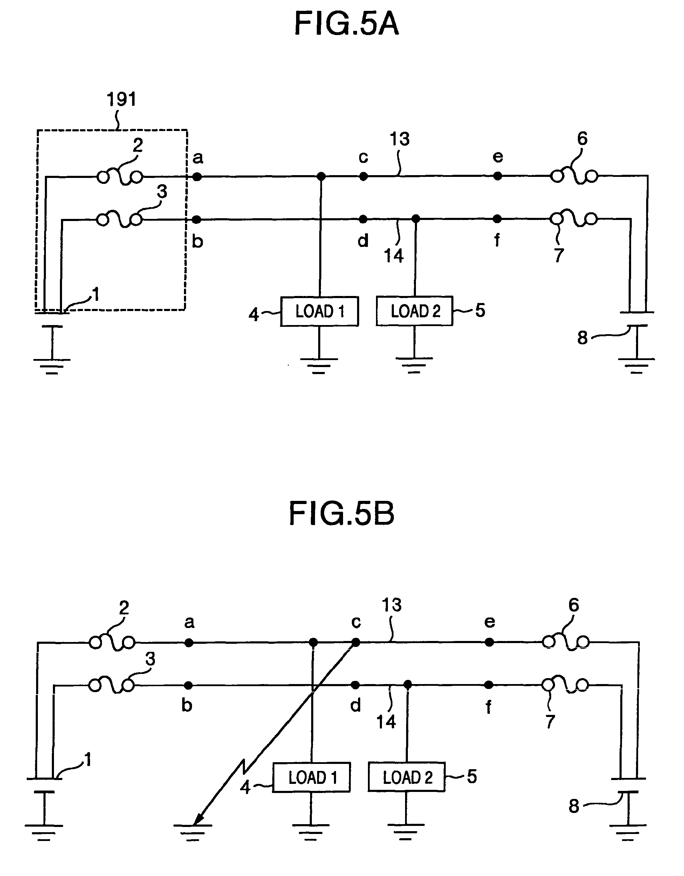

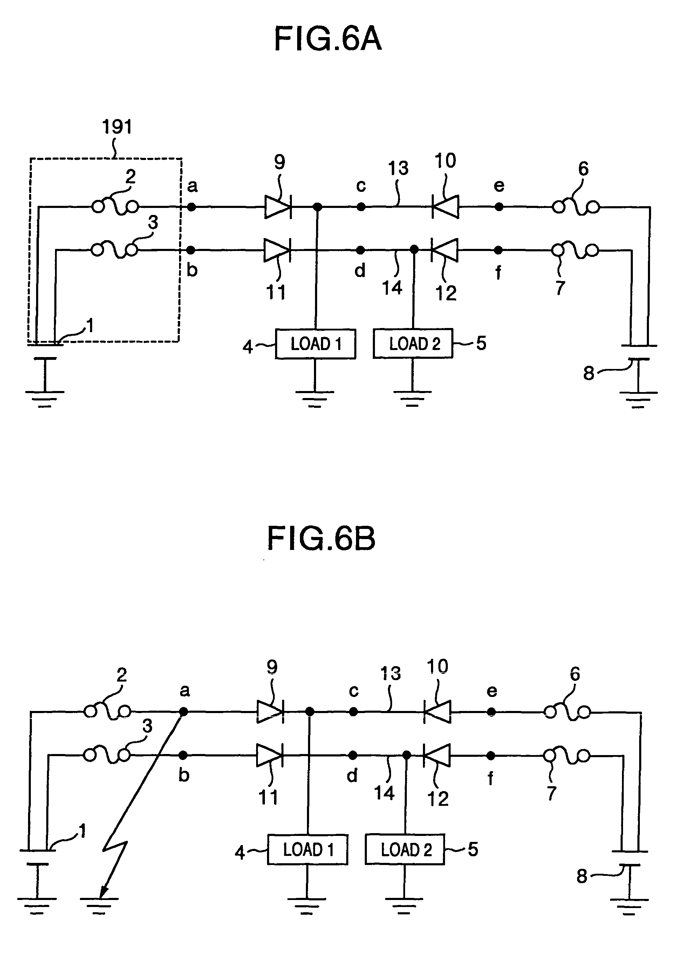

Next, a second embodiment of the invention is explained with reference to Figs. 5A, 5B and 6A, 6B. The second embodiment is an example having a more simple configuration in which the fault detection unit and the circuit breaker unit according to the first embodiment are integrated with each other. Fig. 5A shows a configuration of the second embodiment. The configuration shown in Fig. 5A uses a fuse as a fault detection/circuit breaker unit functioning as both the fault detection unit and the circuit breaker unit at the same time according to the first embodiment. As well known, the fuse has the function of blowing and disconnecting the circuit when a current larger than a rated current flows, and thus exhibits the dual functions as the fault detection unit and the circuit breaker unit according to the first embodiment. The use of a fuse, therefore, simplifies the configuration and reduces the size and the production cost at the same time.

In Fig. 5A, numerals 1, designate DC power supplies, numerals 2, 3, 6 fuses, numerals 4, 5 loads, and numerals 13, 14 power supplying lines. Power is adapted to be supplied to the loads 1 (4) and 2 (5) through the fuses of both the powers supplies 1 and 8. Specifically, the load 1 (4) is supplied with power from the power supply 1 through the fuse 2 on the one hand, and from the power supply 8 through the fuse 6 on the other hand. In similar fashion, the load 2 (5) is supplied with power from the power supply 1 through the fuse 3 on the one hand and from the power supply 8 through the fuse 7 on the other hand. Although the configuration of this embodiment employs the fuses, any configuration having a component member other than the fuse may be employed which has the property of disconnecting the circuit when a current or a voltage out of a predetermined range is applied to the circuit.

As in the first embodiment, the wiring of the portion defined by the frame 191 in Fig. 5A may have a structure as shown in Fig. 13. Then, the wiring between the power supply 1 and the fuses 2, 3 and the wiring between the power supply 8 and the fuses 6, 7 can be prevented from a ground fault for an improved power supply reliability.

In Fig. 13, the power supplying line 1301 corresponds to the power supplying line 13 or 14 in Fig. 5A, and the circuit breaker unit 1302 corresponds to the fuse 2 or 3 in Fig. 5A. The power connection terminal 1303 is used for connecting the power supplying apparatus to the power supply 109. Also according to this embodiment, the use of the configuration shown in Fig. 13 shortens the wiring length between the fuse 2 or 3 and the power connection terminal 1303 and also reduces the chance of exposure of the wiring, so that these wirings are prevented from a ground fault.

An explanation is made about a case in which the circuit is grounded at point c as shown in Fig. 5B. Once the circuit is grounded at point c, a short-circuit current flows from the power supply 1 through the fuse 2 and from the power supply 8 through a fuse 6. Upon generation of the short-circuit current, the fuses 2 and 6 blow to disconnect the circuit and separates the grounded point c to protect the circuit. As a result, power stops being supplied to the load 1 (4), while power continues to be supplied to the load 2 (5). A similar operation is performed also in the case where the load 1 is shorted.

In the case where the ground fault occurs at point d and the load 2 is shorted, on the other hand, the circuit is protected from the burning due to the short-circuit current and the power to the load (4) can be secured.

In the case where the power supply 1 falls or the system of the power supply 1 is disconnected (such as when the fuses 2, 3 blow), the loads 1 (4) and 2 (5) are supplied with power from the power supply 8. In the case where the power supply 8 falls or the system of the power supply 8 is disconnected (such as when the fuses 6, 7 blow), on the other hand, power is supplied from the power supply 1 to the loads 1 (4) and 2 (5).

As described above, according to this embodiment, even in the case one of the loads is shorted, the circuit is grounded in a system, the power supply for one of the systems falls or the circuit is disconnected, it is possible to supply power to at least one of the loads. As compared with the first embodiment, therefore, this embodiment further simplifies the configuration while producing the same effects. Also, the burning of the circuit or the damage to the power supplies by the short-circuit current can be avoided by disconnecting the system in which the fault has occurred.

As shown in Fig. 6A, diodes 9, 11 are inserted between the fuses 2, 3 and the load 1 (4), respectively, and diodes 10, 12 between the fuses 6, 7 and the load 2 (5), respectively. In this way, the reliability of the power supplying apparatus for the vehicle according to this embodiment is further improved.

In Fig. 6A, the diodes are inserted to prevent the fault of one power supply system (for example, the current path from point a to the power supply 1) from having an adverse effect on the other power supply system (for example, the current path from point e to the power supply 8). As shown in Fig. 6B, for example, assume that a ground fault has occurred at point a on the anode side of the diode 9 of the power supplying line 13. The potential at point a drops due to the short-circuit current, which flows through the power supply 1 and the fuse 2, and therefore the fuse 2 blows. As a result, the power from the power supply 1 to the load 1 (4) is cut off, so that the circuit is protected from the burning or the like which otherwise might be caused by the short-circuit current. In the process, the diode 9 inserted in reverse direction between the power supply 8 and point a blocks the short-circuit current flowing from the power supply 8 toward point a. Thus, the power can continue to be supplied from the power supply 8 to the load 1 (4). In similar fashion, even in the case where a ground fault occurs at point b, f or e, the circuit is protected from the burning, etc. due to the short-circuit current, and thus power can continue to be supplied to the load.

The effects of the ground fault at point c or d, the fall of one of the power supplies or the disconnection of one of the power supplying lines are similar to those of a similar fault in the configuration shown in Fig. 1A. In such a case, at least one of the loads can be supplied with power. Unlike in this embodiment having a configuration using diodes, however, any other device other than the diode may be used as far as the current is allowed to flow in one direction while the current flow is blocked in the other direction.

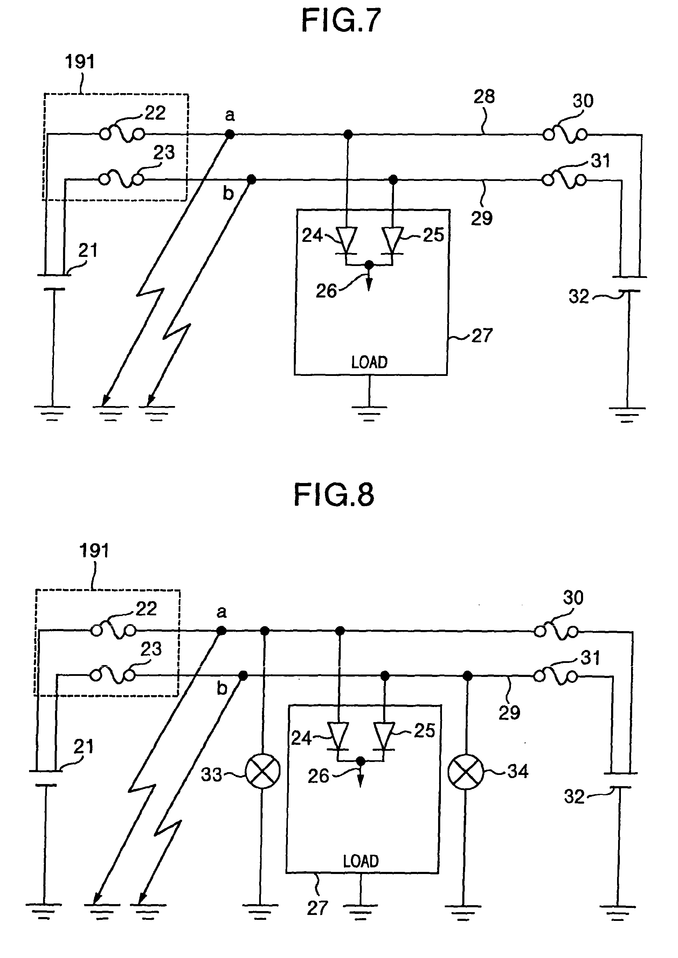

Now, a third embodiment of the invention is explained. In the third embodiment, which has a more simple configuration than the first and second embodiments, power is continuously supplied to the loads even at the time of ground fault of the power supplying lines. The third embodiment is suitably applicable to a case in which each load is less liable to be shorted while the ground fault of the power supplying line or the disconnection is liable to occur. A control unit or the like installed in the vehicle compartments far from the power supply is considered an example of the load in this case. The third embodiment is explained below with reference to Fig. 7.

In Fig. 7, numerals 21, 32 designate power supplies, numerals 22, 23, 30, 31 fuses, numerals 24, 25 diodes, numerals 28, 29 power supplying lines, numeral 27 a load, and numeral 26 a power supplying line in the load. The power supplying line 26 in the load 27 is so configured as to supply power through the diodes 24, 25 from the two power supplies 28, 29. Specifically, power is supplied from the power supply 21 to the load through the fuse 22 and the diode 24 on the one hand, and from the power supply 32 through the fuse 30 and the diode 24 shared by the power supply 21 on the other. Further, power is supplied from the power supply 21 through the fuse 23 and the diode 25 on the one hand and from the power supply 32 through the fuse 31 and the diode 25 shared by the power supply 21 on the other. Although this embodiment uses the fuse, the fault detection unit and the circuit breaker unit may be used in place of the fuse as in the first embodiment. Also, instead of the diodes used in this embodiment, any device other than the diodes which can pass the current in one direction and block the current in the other direction may be used with equal effect.

In Fig. 7, the diodes are inserted to prevent the fault of the system (for example, the current path from point a to the power supplies 21 and 25) for supplying power from one of the power supply systems to the load from adversely affecting the other power supply system (for example, the current path from point b to the power supplies 21 and 32).

Assume, for example, that a ground fault has occurred at point a on the power supplying line 28. In this case, the potential at point a drops due to the short-circuit current, which flows through the power supply 21, the fuse 22, the power supply 32 and the fuse 30, so that the fuses 22, 30 blow. As a result, power stops being supplied from the power supplies 21 and 32, thereby making it possible to protect the circuit from the burning or other fault which otherwise might be caused by the short-circuit current. In the process, since the diode 24 is inserted in reverse direction between the load 27 and point a, no short-circuit current flows from the power supplies 21 and 25 toward point a through the diode 25. Thus, power continues to be supplied to the load from the power supplies 21 and 32 through the diode 25.

Also in the case where a ground fault occurs at point b, the circuit is similarly protected from the burning or the like fault due to the short-circuit current and power can be continuously supplied to the load.

In the case where the power supply 21 falls or the disconnection occurs of the system of the power supply 21 (such as when the fuses 22, 23 blow), on the other hand, the load 27 is still supplied with power from the power supply 32. In the case where the power supply 32 falls, on the contrary, power continues to be supplied from the power supply 21 to the load 27.

Also in this embodiment, the wiring between the power supply 21 and the fuses 21, 23 and the wiring between the power supply 32 and the fuses 28, 29 are preferably so structured as not to easily come into contact with other wirings or never to develop or not to easily develop a ground fault under normal operating conditions.

As described above, according to this embodiment, power can be supplied securely to the load in spite of the ground fault in the system, the fall of one of the power supply systems, the circuit disconnection or the like fault. Also, the system that has developed the fault can be cut off to avoid the burning of the circuit or the damage to the power supplies which otherwise might be caused by the short-circuit current.

By adding the fault detection units 33, 34 to the configuration of Fig. 7 as shown in Fig. 8, the power supply 21 or 32, whichever has fallen, can be detected. Also, the ground fault of the power supplying line 28 or 29 and the circuit disconnection which may occur can also be detected. The fault detection unit may be arranged either inside or independently of the load. Also, the fault detection unit such as a lamp or a buzzer can be connected to the power supplying line to notice a fault directly, or may be so configured as to output a signal to another system upon detection of a fault. A lamp adapted to turn on (or off) in the absence of a fall and turn off (or on) upon occurrence of a fall, a device adapted to output an electrical signal in the absence of a fall and stop or reduce the electrical signal output to zero upon occurrence of a fall, a device adapted to output no electrical signal or reduce the electrical signal output to zero in the absence of a fall and output an electrical signal upon occurrence of a fall or a buzzer adapted to sound upon occurrence of a fall, are some conceivable examples of the fault detection unit.

In an application of this embodiment to a vehicle as in the embodiments described later, a configuration can be employed in which the driver is notified of the occurrence of a fall by a signal transmitted to an information supplying unit (not shown) installed in the compartments upon detection of a fault.

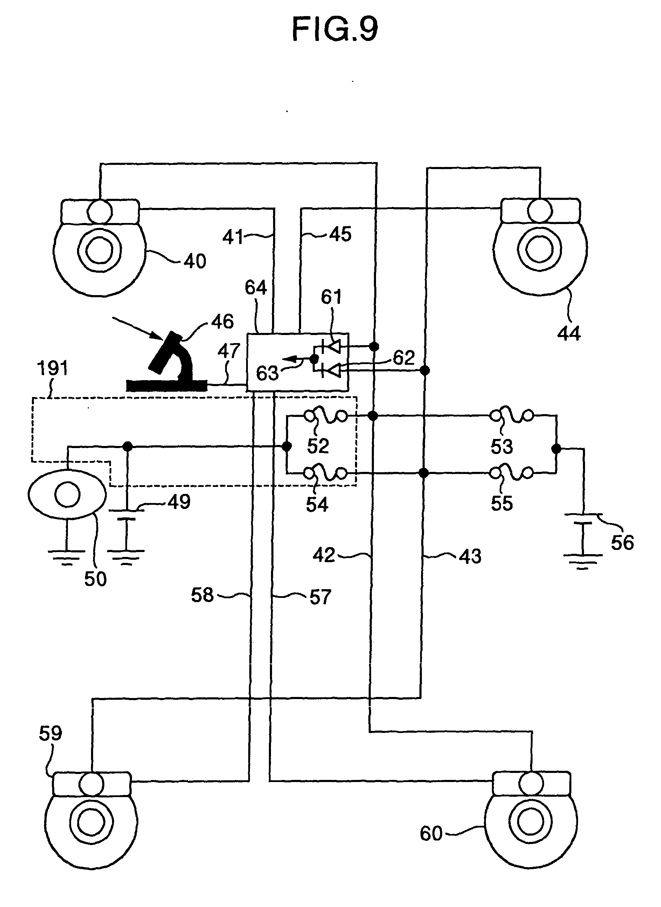

A fourth embodiment of the invention is shown in Fig. 9.

The embodiment shown in Fig. 9 represents an electrical brake system. The electrical brake has various advantages including the elimination of the brake oil piping and the braking performance secured independent of the brake oil temperature characteristic, and is a promising technique as a future vehicle brake. In view of the fact that the braking force is generated by activating an electrical actuator, however, the braking function is lost when power supply is stopped. The electrical brake system, therefore, requires a configuration in which power continues to be supplied to the electrical actuators at the time of such an accident as a collision as well as under normal running conditions.

In Fig. 9, numerals 40, 44, 59, 60 designate actuators for the electrical brakes arranged on the wheels of the vehicle, numeral 46 a sensor simulator for converting the amount of brake operation (the brake pedal angle, brake pedal depression pressure, the brake pedal depression rate, etc.) by the driver into an electrical signal, and numeral 64 a main control unit (hereinafter referred to as the main C/U) for controlling the braking force by outputting a signal to the electrical brake actuators based on the driver's brake operation amount converted into the electrical signal. Thick solid lines such as designated by 42, 43 designate power supplying lines, and thin solid lines such as designated by 41, 45, 47, 58, 59 signal lines.

The driver's brake pedal operation amount is converted into an electrical signal by the sensor simulator 46 and input to the main C/U through the signal line 47. The main C/U 64 determines the required braking force from the driver's brake operation amount input and outputs a braking force signal to the actuators 40, 44, 59, 60 for the respective wheels. The actuators 40, 44, 59, 60 for the respective wheels each generate a braking force based on the respective braking force signal to apply the braking force to the vehicle.

In this configuration, the actuators 40, 44, 59, 60 for the respective wheels and the main C/U 64 operate with the power supplied from the main battery 49 and the subsidiary battery 56. For connecting these electrical loads (the actuators 40, 44, 59, 60 and the main C/U 49) and the power supplies (the main battery 64 and the subsidiary battery 56) to each other, the configuration according to this embodiment is employed for an improved reliability of the electrical brake. This configuration is explained below.

First, the connection between the actuators and the power supplies is explained. The right front actuator 44 and the left rear actuator 59 are combined into a set as a first load, while the left front actuator 40 and the right rear actuator 60 are combined into a set as a second load. Power is supplied to the first load (44, 59) and the second load (40, 60) from both the main battery 49 and the subsidiary battery 56 through a fuse. Specifically, the first load (44, 59) is supplied with power from the main battery 55 through the fuse 54, and from the subsidiary battery 56 through the fuse 55. Similarly, the second load (40, 60) is supplied with power from the main battery 49 through the fuse 52 and from the subsidiary battery 56 through the fuse 53.

In the case where the power supplying line 42 develops a ground fault or the actuator 40 or 60 is shorted, a short-circuit current flows in the main battery 49, the fuse 52, the subsidiary battery 56 and the fuse 53. The fuses 52 and 53 blow due to this short-circuit current, and the power supplying line 42 is separated from the main battery 49 and the subsidiary battery 56. Therefore, the voltage drop across the main battery 49 and the subsidiary battery 56 is prevented, so that power can be continuously supplied to the actuators 44, 59 through the power supplying line 43.

Similarly, in the case where the power supplying line 43 develops a ground fault or the actuator 44 or 59 is shorted, the fuses 54 and 55 blow due to the short-circuit current so that the power supplying line 43 is disconnected from the batteries 49, 56. Thus, power continues to be supplied to the actuators 40, 60.

Further, in the case where the main battery 49 falls or the wiring between the main battery 49 and the power supplying lines 42, 43 is disconnected (such as when the fuses 22, 23 blow), the actuators 40, 41, 59, 60 are supplied with power from the subsidiary battery 56. In the case where the subsidiary battery 56 falls, on the other hand, the actuators 40, 41, 59, 60 are supplied with power from the main battery 49.

According to this embodiment, the braking force can be generated for the front and rear wheels even in the case where one of the power supplying lines falls. Further, in order to generate the braking force for the left and right wheels, the right front actuator 44 is combined with the left rear actuator 59 into a set as a first load and the left front actuator 40 is combined with the right rear actuator 60 into a set as a second load. Nevertheless, as an alternative, in accordance with the vehicle driving system (front wheel drive, rear wheel drive or four-wheel drive) or the vehicle braking system (front-wheel hydraulic and rear-wheel electric, or front-wheel electric and rear-wheel hydraulic, etc.), the front left and right actuators are combined into a set while the rear left and right actuators are combined into another set, or the left or right actuators on the front or rear wheels are combined into a set while the actuators on the right or left actuators on the front and rear sides, as the case may be, are combined into another set.

Next, the connection between the main C/U 64 and the power supplies is explained. In Fig. 9, the main C/U 64 is supplied with power from the main battery 49 through the fuse 52 and the diode 61 on the one hand, and from the subsidiary battery 56 through the fuse 53 and the diode 61 shared by the main battery 49. Further, power is supplied from the main battery 49 through the fuse 54 and the diode 62, and also from the subsidiary battery 56 through the fuse 55 and the diode 62 shared by the main battery 49. This configuration is considered as an application of the third embodiment of the invention.

With this configuration, the power feed to the main C/U 64 can be secured against the faults such as the ground fault or the disconnection of the power supplying line 42 or 43, the fall of the main battery 49 or the subsidiary battery 56 or the shorting of the actuator 40, 44, 59, 60.

The aforementioned configuration also makes it possible to secure the operation of the actuators for at least one of the front or rear wheels against the fault such as the shorting of any one of the actuators, the ground fault of one of the power supplying lines, the fall of one of the power supplies or the disconnection of the wiring, thereby avoiding the total loss of the vehicle braking force.

In Fig. 9, numeral 50 designates a generator for charging the main battery 49 and the subsidiary battery 56, although this configuration is not essential to this invention. This invention has a specific configuration in which some DC power supply is connected at positions corresponding to the main battery and the subsidiary battery in Fig. 9. A configuration in which a generator is arranged for each of the main battery 49 and the subsidiary battery 56, a configuration in which the fuel cell is used in place of the generator or a configuration in which one of the main battery and the subsidiary battery is replaced by a generator is an example of an alternative configuration applicable to the invention with equal effect.

Further, the configuration of Fig. 9 may have the function of detecting the fault of the power supplies (49, 50, 56, etc.), the power supplying lines, the main C/U or the actuators (40, 44, 59, 60, etc.) of each wheel, and upon detection of a fault, a signal may be transmitted to the information supplying unit arranged in the compartments. A specific example of the information supplying unit may be an alarm unit to issue an aural alarm or a display lamp to issue a visual alarm. With this configuration, the occurrence of a fault and the point of the fault can be notified to the driver to urge him/her to stop driving the vehicle and check and repair the fault. Thus, the driver is prevented from continuing to drive the vehicle without noticing the fault. In the case where the generator 50 in the configuration of Fig. 9 runs out of order and the driver continues to drive the vehicle without noticing the fault, for example, the brake might cease to work as soon as the capacity of the subsidiary battery runs out. The configuration according to this embodiment, however, can inform the driver who has noticed the fault to stop the vehicle. Further, depending on the residual capacity of the subsidiary battery 56, the vehicle can continue to be driven to an appropriate repair shop or the like.

Next, prior to explaining a fifth embodiment of the invention, the background thereof is described below.

The actuators, etc. of the electric brake consume considerable power as compared with the conventional electrical loads of the vehicle, and therefore poses the problem that an increased diameter is required of the power supplying lines (wiring harness) used for supplying power. This problem in turn leads to the problem that the fuel consumption efficiency of the vehicle is deteriorated by the increased weight of the harness. A solution conceived to overcome these problems is to supply power to the loads consuming a large amount of power by increasing the voltage and reducing the current value required for power supply without increasing the harness diameter. By tripling the conventional voltage of 12 V to 42 V, for example, the current value required for supplying the same amount of power can be theoretically reduced to one third. Therefore, the increase in harness diameter and hence harness weight can be suppressed.

With a vehicle in which power is supplied to a load of large power consumption by increasing the voltage as described above, a load of small power consumption is supplied with power without increasing the voltage. With regard to the power supplying lines for supplying power using a different voltage from the output voltage of the power supply, therefore, power is supplied through a voltage converter. The power supply may be set to the voltage of selected one of a high voltage system (for example, a 42-V system) and a low voltage system (for example, a 12-V system).

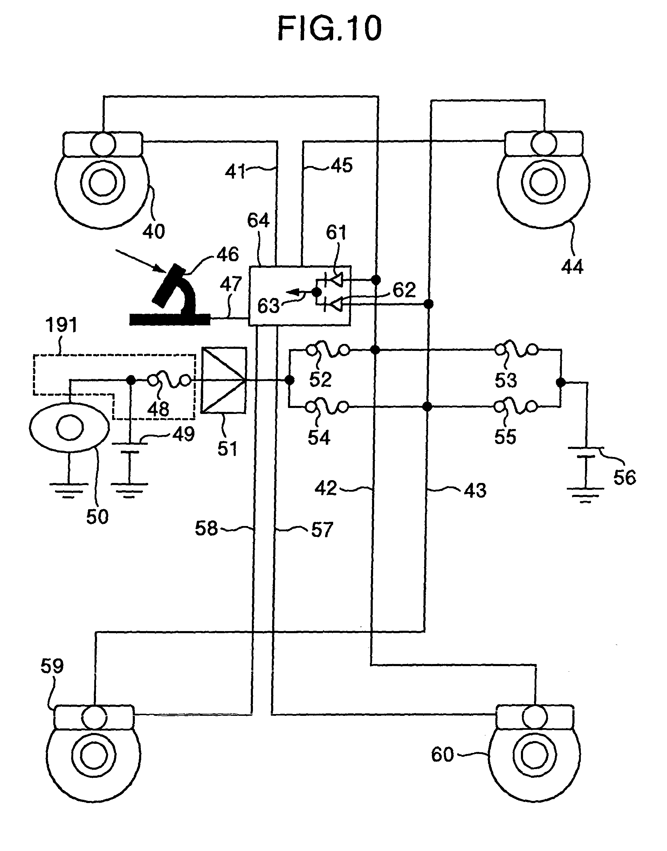

A fifth embodiment of the invention is explained with reference to Fig. 10. This embodiment is similar to the fourth embodiment of Fig. 9 and configured so that a voltage converter 51 is inserted between the power supplies (generator 50, main battery 49, etc.) and the power supplying lines 42, 43. The voltage converter 51 is used to match a plurality of power supplying lines of different voltages which the vehicle may have. The voltage converter 51 and the power supplies are connected to each other through a fuse 48. The wiring between the power supplies and the fuse 48 is preferably structured as shown in Fig. 13 similarly to the first and second embodiments to reduce or eliminate the ground fault or the contact with other wirings under normal operating conditions.

In this configuration, assume that the power supplying line 42 develops a ground fault or the actuator 40 or 60 is shorted. Also, assume that the power supplying line 43 develops a ground fault or the actuator 44 or 59 is shorted. The operation in such a case is similar to that for the fourth embodiment shown in Fig. 9 and makes it possible to secure the operation of the actuator for at least one of the front and rear wheels and thus avoid the total loss of the braking force of the vehicle.

In the case where the main battery 49 or the voltage converter 51 falls or the wiring leading to the power supplying lines 42, 43 from the main battery 49 is disconnected (such as when the fuses 22, 23 blow), the actuators 40, 41, 59, 60 for the respective wheels and the main C/U 64 are supplied with power from the subsidiary battery 49. In the case where the subsidiary battery 56 falls, in contrast, power is supplied from the main battery 49 to the actuators 40, 41, 59, 60 for the respective wheels and the main C/U 64. In this case, assume that the fuse 67 is larger in capacity than the fuses 69, 70. In the case where one of the power supplying lines 74, 77 develops a ground fault, the subsidiary battery 73 can be charged through the other power supplying line that remains normal.

Also, in the case where a ground fault occurs between the voltage converter 51 and the fuses 52, 53, the fuses 52, 53 and 54 blow thereby to separate the grounded portion.

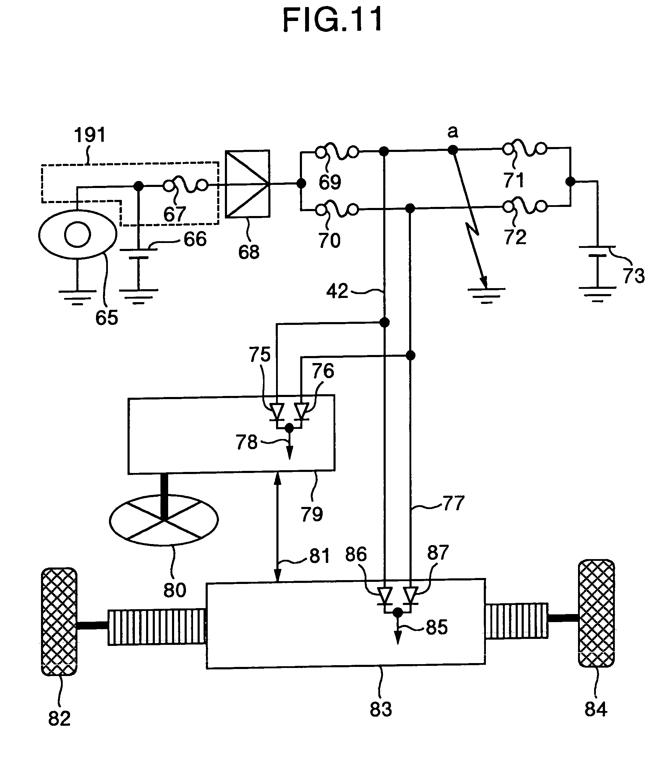

A sixth embodiment is explained below with reference to Fig. 11. The embodiment shown in Fig. 11 concerns an electric power steering system (hereinafter referred to as the power steering system).

When the driver manipulates the steering wheel 80, the power steering system detects the turning angle through an electric power steering control unit (hereinafter referred to as the power steering C/U) 79 and transmits the resultant information to an electric power steering drive unit (hereinafter referred to as the power steering D/U) 83 through the bus 81. The power steering D/U 83 turns the wheels 82, 84 in accordance with the steering information received thereby to steer the vehicle.

In this configuration, the power steering C/U 79 and the power steering D/U 83 are activated by the power supplied from the main battery 66 and the subsidiary battery 73. The reliability of the electric power steering operation is improved by employing the configuration according to this embodiment for the connection between the electrical loads (power steering C/U 79, power steering D/U 83) and the power supplies (main battery 66, subsidiary battery 73). The connection between the power steering C/U 79 or the power steering D/U 83 and the power supplies is explained below.

In Fig. 11, the power steering C/U 79 (power steering D/U 83) is supplied with power from the main battery 66 through the fuse 69 and the diode 75 (86) on the one hand and from the subsidiary battery 56 through the fuse 71 and the diode 75 (86) shared by the main battery 66 on the other hand. Further, power is supplied from the main battery 66 through the fuse 70 and the diode 76 (87) on the one hand and from the subsidiary battery 73 through the fuse 72 and the diode 76 (87) shared by the main battery 66. This configuration represents an application of the third embodiment of the invention. As in the fourth embodiment, the wiring between the power supplies and the fuse 67 is preferably so structured as to hardly develops or eliminate the contact with other wirings or a ground fault under normal operating conditions.

In the case where the main battery 66 or the voltage converter 68 falls or the wiring between the main battery 66 and the power supplying lines 74 and 77 is disconnected (such as when the fuse 69 or 70 blows), then power is supplied from the subsidiary battery 56 to the power steering C/U 79 and the power steering D/U 83. In the case where the subsidiary battery 73 falls, on the other hand, power is supplied from the main battery 66 to the power steering C/U 79 and the power steering D/U 83.

Assuming that the capacity of the fuse 67 is larger than that of the fuses 69, 70 and that one of the power supplying lines 74, 77 develops a ground fault, the subsidiary battery 73 is charged through the other power supplying line which remains normal.

In the event that a ground fault occurs between the voltage converter 68 and the fuses 69, 70, the fuses 69, 70 blow to separate the grounded portion.

This configuration permits power to be continuously supplied to the power steering C/U 79 (power steering D/U 83) against a trouble such as a ground fault or the disconnection of the power supplying line 74 or 77 or the fall of the main battery 66 or the subsidiary battery 73. As a result, the steering operation is prevented from becoming impossible upon the occurrence of the fault, so that the driver can at least safely stop the vehicle.

Further, the configuration show in Fig. 11, like the configuration of the fourth embodiment shown in Fig. 9, may include a fault-detection unit such as the power supplies (65, 66, 73, etc.), the power supplying lines 74, 77, the power steering C/U 79 and the power steering D/U 83 to send a signal to the information supplying unit in the compartments upon detection of a fault. This configuration makes it possible to notify the driver of the occurrence of a fault and the point of the fault and urge him/her to stop, inspect and repair the vehicle. Thus, the driver is prevented from continuing to drive the vehicle without noticing the fault.

In Fig. 11, numeral 65 designates a generator for charging the main battery 65 and the subsidiary battery 73. Like the fourth embodiment, however, this configuration is not essential for embodying the invention. A similar effect to the invention is produced by connecting a DC power supply of some kind at the positions corresponding to the main battery and the subsidiary battery in Fig. 11.

This embodiment is explained above with reference to a configuration in which the main battery 66 and the subsidiary battery 73 have different voltages and the voltage converter 68 is included as in the fifth embodiment. As in the fourth embodiment, however, the main battery 66 and the subsidiary battery 73 may have the same voltage.

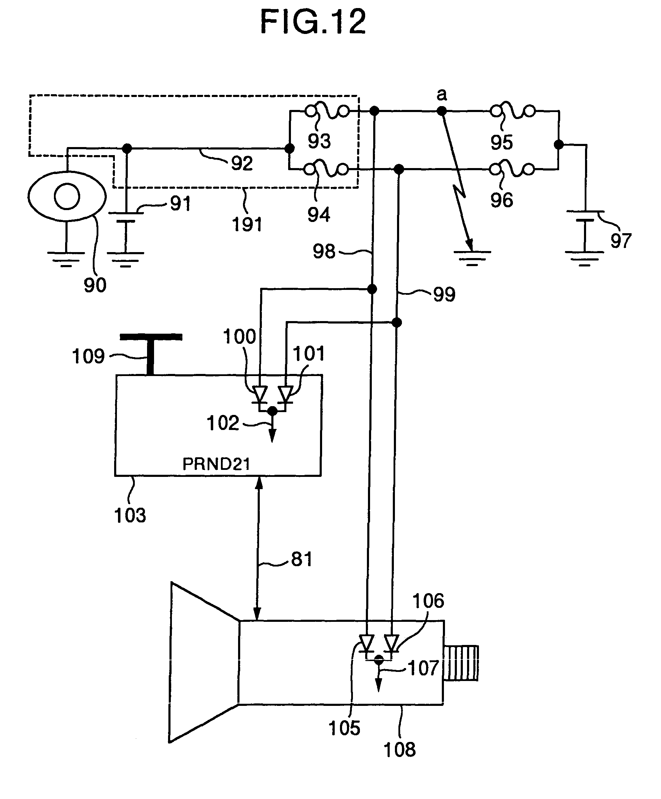

A seventh embodiment of the invention is shown in Fig. 12. The embodiment shown in Fig. 12 concerns an electrical gear shift system.

The electrical gear shift system is activated by the driver operating a gear shift switch 109 and thereby inputting the shift position information. The shift position information is detected by the electrical gear shift control unit (hereinafter referred to as the electrical shift C/U) 103, and transmitted through a bus 104 to an electrical gear shift drive unit (hereinafter referred to as the electrical shift D/U) 108. Based on the shift position information thus received, the electrical shift D/U 108 switches the shift position of the transmission, so that the reduction gear ratio is changed and the driving force is transmitted to the drive system.

In this configuration, the electrical shift C/U 103 and the electrical shift D/U 108 are operated by the power supplied from the main battery 91 and the subsidiary battery 97. The employment of the configuration according to this embodiment in connecting these electrical loads (electrical shift C/U 103, electrical shift D/U 108) and the power supplies (main battery 91, subsidiary battery 97) improves the reliability of the electrical power steering operation. The connection between the electrical shift C/U 103 or the electrical power D/U 108 and the power supplies is explained below.

In Fig. 12, the electrical shift C/U 103 (electrical shift D/U 108) is supplied with power from the main battery 91 through the fuse 93 and the diode 100 (105) on the one hand and also from the subsidiary battery 97 through the fuse 95 and the diode 100 (105) shared by the main battery 91 on the other hand. Further, power is supplied from the main battery 91 through the fuse 94 and the diode 101 (106) on the one hand and from the subsidiary battery 97 through the fuse 96 and the diode 101 (106) shared by the main battery 91 on the other hand. This configuration is an application of the third embodiment of the invention and similar to that of the sixth embodiment shown in Fig. 11. The wiring between the power supplies and the fuse 67, like the wiring in the fourth embodiment, is preferably so structured as to hardly or never develop a ground fault or contact the other wiring under normal operating conditions.

In the case where the main battery 91 falls or the wiring between the main battery 91 and the power supplying lines 98 and 99 is disconnected (such as when the fuses 93, 94 blow), the electrical shift C/U 103 and the electrical shift D/U 108 are supplied with power from the subsidiary battery 97. In the case where the subsidiary battery 97 falls, on the contrary, the electrical shift C/U 103 and the electrical shift D/U 108 are supplied with power from the main battery 91.

With this configuration, power supply to the electrical shift C/U (electrical shift D/U 108) is secured against a trouble such as a ground fault or the disconnection of the power supplying line 98 or 99 or the fall of the main battery 91 or the subsidiary battery 97. Therefore, the gear shift operation is prevented from becoming impossible as soon as a fault occurs, so that the driver can at least safely stop the vehicle.

Further, the configuration shown in Fig. 12, like the configuration according to the fourth embodiment shown in Fig. 9, may include a fault-detection unit such as the power supplies (90, 91, 97, etc.), the power supplying lines 98, 99, the electrical shift C/U 103 and the electrical shift D/U 108, so that a signal is sent to the information supplying unit in the compartments upon detection of a fault. With this configuration, the driver, notified of the occurrence of a fault and the point of the fault, can be urged to stop driving and inspect and repair the vehicle. Therefore, the driver is prevented from continuing to drive the vehicle without noticing the fault.

In Fig. 12, numeral 90 designates a generator for charging the main battery 91 and the subsidiary battery 97. This configuration, however, like in the fourth embodiment, is not essential in embodying the invention. Any configuration in which some DC power supply is connected at positions corresponding to the main battery and the subsidiary battery in Fig. 12 produce the same effects of the invention.

Although the voltage of the main battery 91 is equal to that of the subsidiary battery 97 according to this embodiment like in the fourth embodiment, a voltage converter may be used as an alternative like in the fifth embodiment with equal effect.

According to this invention, even in the case where a fault occurs such as the fall of a power supply, the shorting of a load connected to the power supplying lines of the same system or a ground fault or disconnection of the power supplying lines, power can be continuously supplied to the loads of the other system having developed no fault.

Also, the reliability of an electrical brake is improved by an application of this invention thereto.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A power supplying apparatus for a vehicle, comprising a plurality of loads and a plurality of power supplies connected to each other;
wherein each of said plurality of the loads (107, 108) is connected with a plurality of power supplies (100, 115);
wherein each of said plurality of the power supplies (100, 115) is connected with said plurality of loads; and
wherein said power supplies and said loads are connected through a breaker unit (101, 104, 111, 114) for electrically disconnecting the circuit under predetermined conditions.

2. A power supplying apparatus for a vehicle according to Claim 1, further comprising a unidirectional conductive unit (116, 117, 118, 119) for allowing the current to flow in one direction and blocking the current in the opposite direction;
wherein said unidirectional conductive unit is connected to the load side of said breaker unit in such a direction as to allow the current to flow from a power supply toward a load.

3. A power supplying apparatus for a vehicle according to Claim 1 or 2,
wherein said breaker unit (191) includes a fault detection unit for detecting a fault to disconnect the circuit, based on selected one of a current value and a voltage value, and a circuit breaker unit for disconnecting the circuit in response to the information from said fault detection unit.

4. A power supplying apparatus for a vehicle according to at least one of Claims 1 to 3,
wherein said breaker unit is a fuse.

5. A power supplying apparatus for a vehicle according to at least one of Claims 1 to 4,
wherein said plurality of the loads are the actuators of an electric brake.

6. A power supplying apparatus for a vehicle according to at least one of Claims 1 to 5,
wherein said plurality of the loads are formed in such a manner that one set of loads include the actuators on the right side of the vehicle, and the other set of the loads include the actuators on the left side of the vehicle, said loads being connected to said plurality of the power supplies.

7. A power supplying apparatus for a vehicle according to at least one of Claims 1 to 6,
wherein said plurality of the loads are so formed that the actuator for the right front wheel (44) of the vehicle and the actuator for the left rear wheel (59) of the vehicle constitute a set of loads, and the actuator for the left front wheel (40) of the vehicle and the actuator for the right rear wheel (60) of the vehicle constitute another set of loads, said actuators being connected to said plurality of the power supplies.

8. A power supplying apparatus for a vehicle according to at least one of Claims 1 to 7, further comprising a connector (1303) for connecting at least a power supplying line (1301) to a power supply, said connector being integrated with said breaker unit (1302).

9. A power supplying apparatus for a vehicle, comprising:
at least a load (107, 108) and a plurality of power supplies (100, 115) connected to each other;
a first unidirectional conductive unit and a second unidirectional conductive unit for allowing the current to flow from an input unit to an output unit and blocking the current from the output unit to the input unit; and
a breaker unit (101, 104, 111, 114) for disconnecting the circuit under predetermined conditions;
wherein the output unit of said first unidirectional conductive unit and the output unit of said second unidirectional conductive unit are connected to said load;
wherein the input unit of said first unidirectional conductive unit is connected to a plurality of power supplies through said plurality of the breaker units; and
wherein the input unit of said second unidirectional conductive unit is connected to a plurality of power supplies through said plurality of the breaker units.

10. A power supplying apparatus for a vehicle according to Claim 9,
wherein said breaker unit includes a fault detection unit for detecting a fault to disconnect the circuit, based on selected one of a current value and a voltage value, and a circuit breaker unit for disconnecting the circuit in response to the information from said fault detection unit.

11. A power supplying apparatus for a vehicle according to Claim 9 or 10,
wherein said breaker unit is a fuse.

12. A power supplying apparatus for a vehicle according to at least one of Claims 9 to 11,
wherein said load includes a controller for selected one of an electric brake, an electric power steering system and an electric gear shift system.

13. A power supplying apparatus for a vehicle according to at least one of Claims 9 to 12,
wherein said load includes an actuator for selected one of an electric power steering system and an electric gear shift system.

14. A power supplying apparatus for a vehicle according to at least one of Claims 9 to 13, further comprising a connector for connecting a power supplying line to a power supply, said breaker unit being integrated with said connector.

15. A power supplying apparatus for a vehicle, comprising:
a plurality of loads and a plurality of power supplies connected to each other;
first, second, third and fourth unidirectional conductive units for allowing the current to flow from an input unit to an output unit and blocking the current from the output unit to the input unit; and
a breaker unit for disconnecting the circuit under predetermined conditions;
wherein the output unit of said first unidirectional conductive unit and the output unit of said second unidirectional conductive unit are connected to one group of said plurality of said loads;
wherein the output unit of said third unidirectional conductive unit and the output unit of said fourth unidirectional conductive unit are connected to another group of said plurality of said loads;
wherein the input unit of said first unidirectional conductive unit and the input unit of said second unidirectional conductive unit are connected to different power supplies through said breaker unit; and
wherein the input unit of said third unidirectional conductive unit and the input unit of said fourth unidirectional conductive unit are connected to different power supplies through said breaker unit.

16. A power supplying apparatus for a vehicle according to Claim 15,
wherein said one group of said plurality of the loads include first and second actuators for the front wheels of the vehicle and third and fourth actuators for the rear wheels of the vehicle;
wherein said first and third actuators constitute said one group of said loads, and said second and fourth actuators constitute said another group of said loads.

17. A power supplying apparatus for a vehicle according to Claim 15 or 16, further comprising fifth and sixth unidirectional conductive units,
wherein the output unit of said fifth unidirectional conductive unit and the output unit of said sixth unidirectional conductive unit are connected to the controller of said electric brake;
wherein the input unit of said fifth unidirectional conductive unit is connected to a plurality of power supplies through a plurality of said breaker units; and
wherein the input unit of said sixth unidirectional conductive unit is connected to a plurality of power supplies through a plurality of said breaker units.

18. A power supplying method for a vehicle to connect a plurality of loads and a plurality of power supplies to each other;
wherein said plurality of the loads are each connected to a plurality of power supplies;
wherein said plurality of the power supplies are each connected to a plurality of loads; and
wherein said power supplies and said loads are connected through a breaker unit for electrically disconnecting the circuit under predetermined conditions.

19. A power supplying method for a vehicle according to Claim 18,
wherein said plurality of the loads are so configured that one set of said loads includes the actuators on the right side of the vehicle and the other set of said loads includes the actuators on the left side of the vehicle.

20. A power supplying method for a vehicle;
wherein a plurality of loads and a plurality of power supplies are connected to each other using a unidirectional conductive unit for allowing the current to flow from an input unit to an output unit and blocking the current from the output unit to the input unit and a breaker unit for disconnecting the circuit under predetermined conditions;
wherein the output unit of said first unidirectional conductive unit and the output unit of said second unidirectional conductive unit are connected to one group of said plurality of said loads;
wherein the output unit of said third unidirectional conductive unit and the output unit of said fourth unidirectional conductive unit are connected to another group of said plurality of said loads;
wherein the input unit of said first unidirectional conductive unit and the input unit of said second unidirectional conductive unit are connected to different power supplies through said breaker unit; and
wherein the input unit of said third unidirectional conductive unit and the input unit of said fourth unidirectional conductive unit are connected to different power supplies through said breaker unit.
